# EUROPÄISCHE PATENTSCHRIFT

(11) **EP 2 810 822 B1**
(45) Veröffentlichungstag und Bekanntmachung des Hinweises auf die Patenterteilung: **15.08.2018**
(21) Anmeldenummer: 14170805.7
(22) Anmeldetag: 02.06.2014
(51) Int. Cl.: B60P 1/34

(54) **Überladefahrzeug**
Transfer trolley
Véhicule de transbordement

(30) Priorität: 04.06.2013 DE 202013102388 U
(43) Veröffentlichungstag der Anmeldung: 10.12.2014
(73) Patentinhaber: Fliegl jun., Josef, 84453 Mühldorf am Inn (DE)
(72) Erfinder: Fliegl jun., Josef, 84453 Mühldorf am Inn (DE)
(74) Vertreter: Tetzner, Michael

(56) Entgegenhaltungen:
- DE-A1- 1 945 289
- DE-A1- 3 720 652
- DE-U1- 9 205 933
- DE-U1-202012 104 724
- FR-A1- 2 302 883
- US-A- 2 555 263

## Beschreibung

Die Erfindung betrifft ein Überladefahrzeug zum Überladen von Schüttgut.

Aus der DE 71 42 738 U ist ein landwirtschaftlicher Transportanhänger mit einer Wagenpritsche bekannt, deren Abladekante vor der Entladung auf eine Höhe von mehr als 2 m angehoben werden kann.

Weiterhin wird in der DE 10 2004 022 874 A1 ein Ladewagen beschrieben, der es ermöglicht Schüttgut in ein Transportfahrzeug umzuladen, wobei der Erntegutspeicher mittels einer Hubvorrichtung in eine erhöhte Umladestellung gebracht werden kann. Der Erntegutspeicher ist dabei in seinem vorderen Bereich um eine Schwenkachse gelenkig an einem Fahrzeugrahmen gelagert. Eine zum Anhängen des Ladewagens vorgesehene Deichsel bildet mit dem Erntegutspeicher eine starre Einheit, sodass die Deichsel gegenüber dem Fahrzeugrahmen um dieselbe Schwenkachse schwenkbar ist, sodass die Deichsel gegenüber dem Fahrzeugrahmen beim nach oben Schwenken des Erntegutspeichers einknickt. Da die Deichsel am Zugfahrzeug angehängt ist, wird die Schwenkachse dadurch nach oben bewegt und vergrößert dadurch die Hubbewegung des Erntegutspeichers.

Eine von der Wirkung ganz ähnliche Lösung zeigt die DE 10 2009 035 038 A1, bei der die Deichsel nicht starr mit dem Erntegutspeicher verbunden ist, sondern als hydraulische Knickdeichsel am Fahrzeugrahmen angelenkt ist.

Aus der DE 92 05 933 U1 und der DE 37 20 652 A1 sind Fahrzeuge gemäß dem Oberbegriff des Anspruches 1 bekannt, die sich durch einen ersten und einen zweiten Kipprahmen auszeichnen.

Der Erfindung liegt nun die Aufgabe zugrunde, eine andere Lösung für ein Überladefahrzeug zu finden, das sich zudem durch eine vereinfachte Belademöglichkeit auszeichnet.

Erfindungsgemäß wird diese Aufgabe durch die Merkmale des Anspruches 1 gelöst.

Das erfindungsgemäße Überladefahrzeug weist ein Fahrwerk, einen sich auf dem Fahrwerk abstützenden Fahrwerksrahmen und einen auf dem Fahrwerksrahmen gehalterter Ladecontainer auf. Der Ladecontainer ist mit einem Kippmechanismus am Fahrwerksrahmen gehaltert, wobei
- der Kippmechanismus einen ersten Rahmenteil und einen zweiten Rahmenteil umfasst, die um ein erstes, eine erste Kippachse bildendes Kippgelenk gelenkig miteinander verbundenen sind,
- der erste Rahmenteil um ein zweites, eine zweite Kippachse bildendes Kippgelenk schwenkbar am Fahrwerksrahmen gehaltert ist,
- der Ladecontainer am zweiten Rahmenteil befestigt ist, und
- die erste Kippachse zum Anheben des heckseitigen Endes des Ladecontainers im Bereich des vorderen Endes des Ladecontainers und
- die zweite Kippachse zum Anheben des vorderen Endes des Ladecontainers und zum gleichzeitigen Absenken des heckseitigen Endes in einem Bereich zwischen dem vorderen und dem heckseitigen Ende des Ladecontainers angeordnet ist und
- der Ladecontainer als Abschiebecontainer mit einer Abschiebevorrichtung ausgebildet ist

Durch den um zwei Kippgelenke beweglichen Kippmechanismus kann zum einen das heckseitige Ende des Ladecontainers angehoben werden, um ein Überladen von Schüttgut, beispielsweise in ein größeres Transportfahrzeug, zu erleichtern und zum anderen kann das heckseitige Ende des Ladecontainers zur Vereinfachung des Beladenvorganges abgesenkt werden.

Weitere Ausgestaltungen der Erfindung sind Gegenstand der Unteransprüche.

Gemäß einer weiteren Ausgestaltung der Erfindung ist die zweite Kippachse insbesondere im Bereich oberhalb des Fahrwerks angeordnet. Der Kippmechanismus kann eine mit dem ersten Rahmenteil in Verbindung stehende erste Hubeinrichtung und eine mit dem zweiten Rahmenteil in Verbindung stehende zweite Hubeinrichtung umfassen, wobei die beiden Hubeinrichtungen jeweils wenigstens einen, vorzugsweise zwei, hydraulische Hubzylinder aufweisen können. Gemäß einer bevorzugten Ausführungsform stützen sich die beiden Hubeinrichtungen mit einem Ende am bzw. auf dem Fahrwerksrahmen ab und stehen mit dem anderen Ende mit dem ersten bzw. zweiten Rahmenteil in Verbindung. Weiterhin ist der Fahrwerksrahmen, auf dem sich die beiden Hubeinrichtungen abstützen, und der sich seinerseits auf dem Fahrwerk abstützt, starr ausgebildet.

Die Abschiebevorrichtung ist beispielsweise als Abschiebewand oder Förderboden ausgebildet oder mit sonstigen Austragsmitteln ausgestattet.

Weiterhin kann der Ladecontainer von einer im Wesentlichen horizontalen Fahrposition in eine Überladeposition mit einem angehobenen, heckseitigen Ende und in eine Beladeposition mit einem gegenüber der Fahrposition abgesenkten, heckseitigen Ende gekippt werden. Die Endladeöffnung ist zweckmäßigerweise mit einer Klappe oder einer Fräse verschließbar ist, wobei die Fräse zum Beladen und ggf. Entladen des Ladecontainers mit Schüttgut, bei dem es sich beispielsweise um Silage handelt, verwendet wird.

Das Überladefahrzeug kann entweder selbstfahrend oder als Anhänger ausgebildet werden.

Weitere Ausgestaltungen der Erfindung werden anhand der nachfolgenden Beschreibung und der Zeichnung näher erläutert.

In der Zeichnung zeigen
- Fig. 1: schematische Seitenansicht des Überladefahrzeugs in der Fahrposition,
- Fig. 2: seitliche Schnittdarstellung des Überladefahrzeugs in der Überladeposition,
- Fig. 3: schematische Seitenansicht des Überladefahrzeugs in der Beladeposition,
- Fig. 4: seitliche Schnittdarstellung des Überladefahrzeugs in der Überladeposition mit angehobenem vorderen Ende und,
- Fig. 5: schematische Seitenansicht eines selbstfahrenden Überladefahrzeugs in Fahrposition.

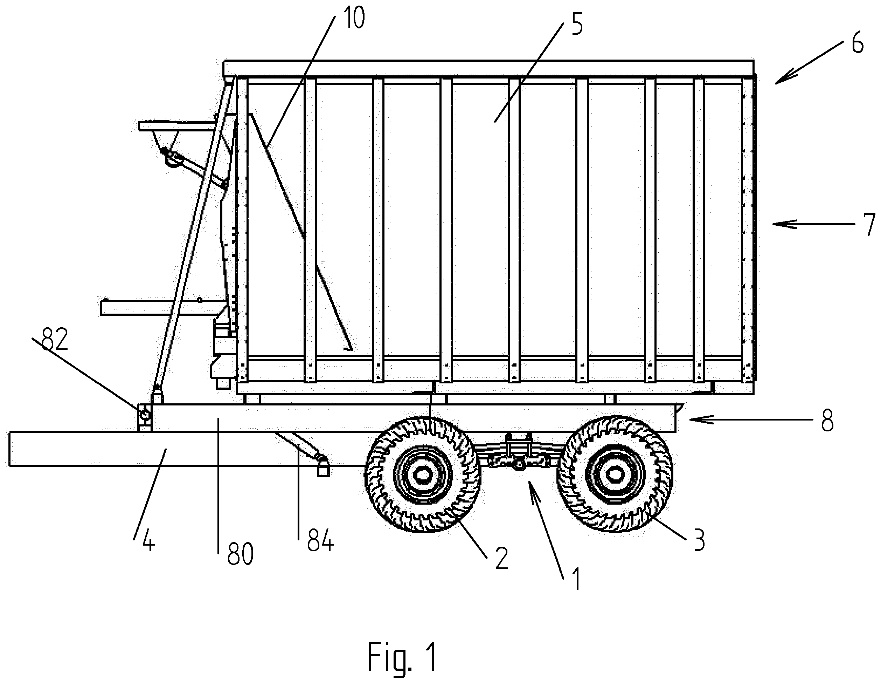

Das in den Fig. 1 bis 4 dargestellte Überladefahrzeug weist ein Fahrwerk 1 mit Rädern 2, 3, einen sich auf dem Fahrwerk abstützenden Fahrwerksrahmen 4 und einen auf dem Fahrwerksrahmen 4 gehalterten Ladecontainer 5 mit einer an seinem heckseitigen Ende 6 vorgesehenen Entladeöffnung 7 auf. Der Fahrwerksrahmen 4 ist hier als rechteckiger Längsmittelträger ausgebildet. Das Fahrwerk 1 kann beispielsweise als Boogieachse ausgebildet sein.

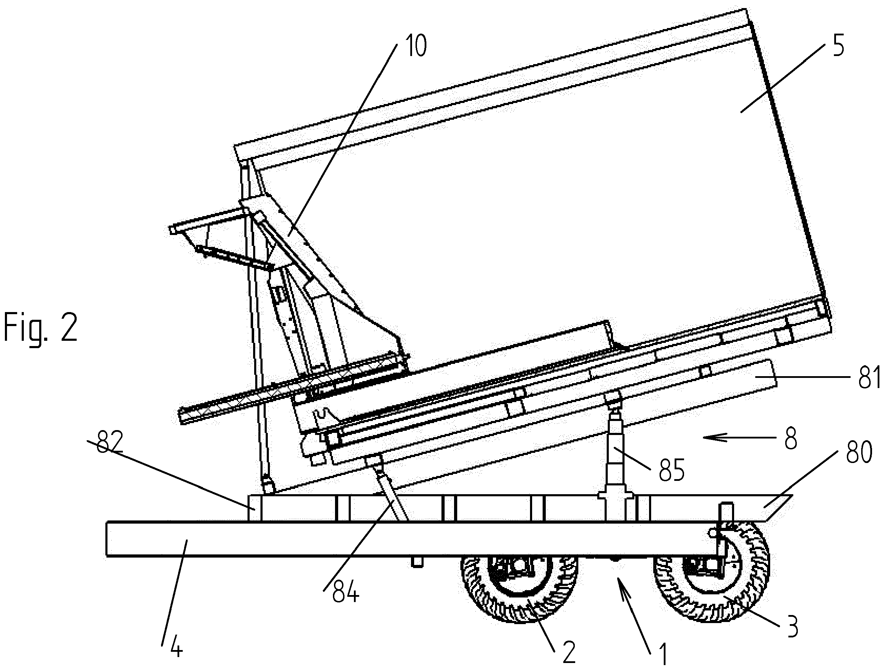

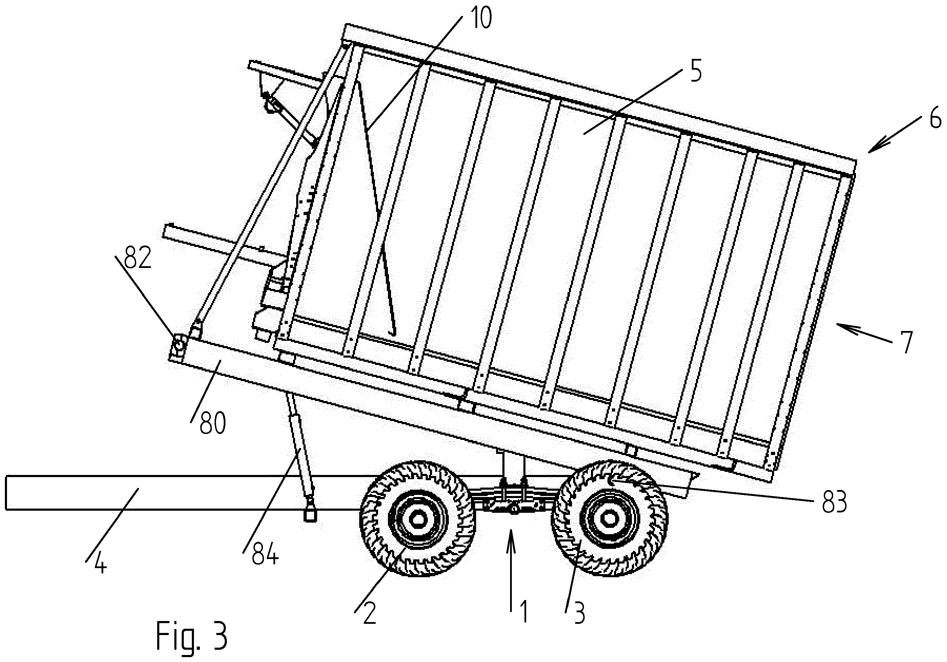

Der Ladecontainer 5 ist über einen Kippmechanismus 8 am Fahrwerksrahmen 4 gehaltert und weist einen ersten Rahmenteil 80 und einen zweiten Rahmenteil 81 auf, die um ein erstes Kippgelenk 82 gelenkig miteinander verbundenen sind. Ferner ist der erste Rahmenteil 80 um ein zweites Kippgelenk 83 (Fig. 3) schwenkbar am Fahrwerksrahmen 4 gehaltert. Der Ladecontainer ist am zweiten Rahmenteil 81 befestigt. Das erste Kippgelenk 82 bildet somit eine erste Kippachse zum Anheben des heckseitigen Endes 6 des Ladecontainers 5 (Fig. 2) und das Kippgelenk 83 stellt die zweite Kippachse zum Anheben eines vorderen Endes 9 des Ladecontainers 5 und zum gleichzeitigen Absenken des heckseitigen Endes 6 (Fig. 3) dar. Die beiden Kippachsen bzw. Kippgelenke 82, 83 sind dabei so angeordnet, dass die erste Kippachse im Bereich des vorderen Endes 9 des Ladecontainers 5 und die zweite Kippachse in einem Bereich zwischen dem vorderen und dem heckseitigen Ende des Ladecontainers 5 vorgesehen sind.

Der Kippmechanismus 8 umfasst weiterhin eine mit dem ersten Rahmenteil 80 in Verbindung stehende erste Hubeinrichtung 84 und eine mit dem zweiten Rahmenteil 81 in Verbindung stehende zweite Hubeinrichtung 85, die insbesondere als hydraulische Hubzylinder ausgebildet sein können. Beide Hubeinrichtungen 84, 85 stützen sich mit einem Ende auf dem Fahrwerksrahmen 4 ab und stehen mit ihren anderen Enden mit dem ersten Rahmenteil 80 bzw. dem zweiten Rahmenteil 85 in Verbindung.

Im dargestellten Ausführungsbeispiel ist der Ladecontainer 5 als Abschiebecontainer mit einer Abschiebevorrichtung 10 ausgebildet, die eine allgemein bekannte Abschiebewand und einen Abschiebeboden umfasst. Im Rahmen der Erfindung sind aber auch andere Austragseinrichtungen denkbar. Die Endladeöffnung 7 ist mit einer nicht näher dargestellten Klappe oder einer Fräse verschließbar.

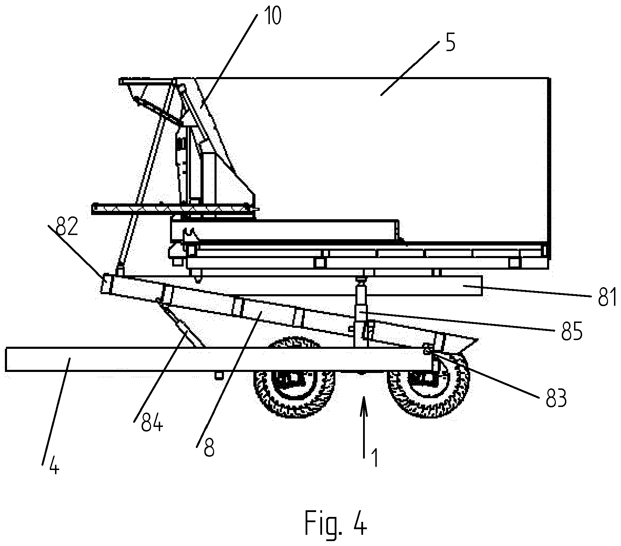

Durch den Kippmechanismus kann der Ladecontainer 5 von einer Fahrposition gemäß Fig. 1 in eine Überladeposition mit angehobenem, heckseitigem Ende gemäß Fig. 2 und in eine Beladeposition mit einem gegenüber der Fahrposition abgesenkten, heckseitigen Ende 6 gemäß Fig. 3 gekippt werden. Weiterhin besteht auch die Möglichkeit, beide Hubeinrichtungen zu betätigen, wie das in Fig. 4 dargestellt ist. Dabei kann der Ladecontainer beispielsweise parallel zum Boden angehoben werden. Zweckmäßigerweise wird die Hubeinrichtung 85 einen höheren Hub, beispielsweise 2 m oder mehr, als die Hubeinrichtung 84 ermöglichen. Neben einem horizontalen Anheben des Ladecontainers gemäß Fig. 4 könnte die zweite Hubeinrichtung noch weiter ausgefahren werden. Dadurch ist der Ladecontainer bei voller Überladehöhe etwas weniger steil als in Variante gemäß Fig. 2 ausgerichtet, wodurch das Überladen erleichtert werden kann.

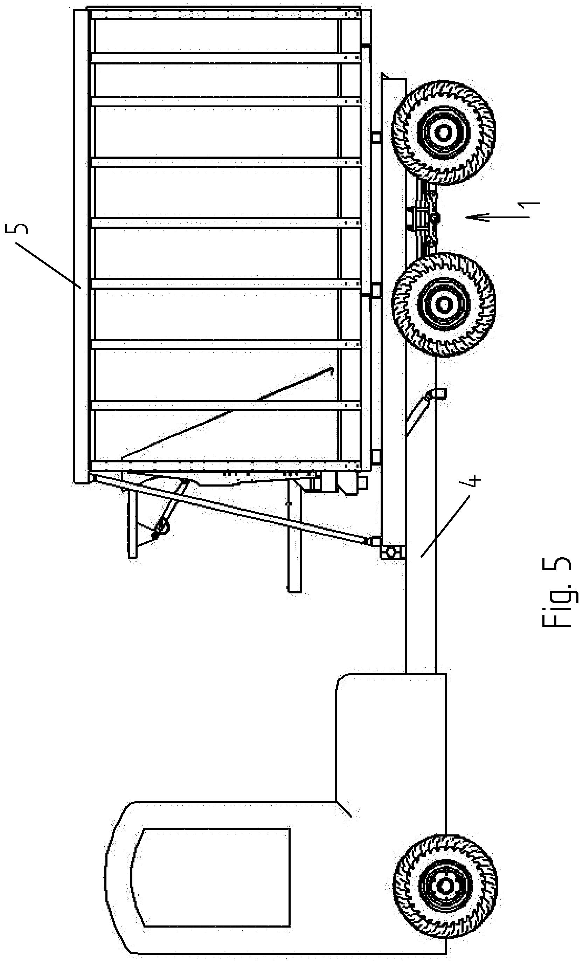

Das Überladefahrzeug gemäß den Fig. 1 bis 4 kann als Anhänger oder selbstfahrend genutzt werden. Die selbstfahrende Variante ist in Fig. 5 schematisch dargestellt.

## Patentansprüche

1. Überladefahrzeug mit einem Fahrwerk (1), einem sich auf dem Fahrwerk (1) abstützenden Fahrwerksrahmen (4), ein auf dem Fahrwerksrahmen (4) gehalterter Ladecontainer (5) mit einer an einem heckseitigen Ende (6) vorgesehenen Entladeöffnung (7), wobei der Ladecontainer (5) mit einem Kippmechanismus (8) am Fahrwerksrahmen (4) gehaltert ist, wobei
- der Kippmechanismus (8) einen ersten Rahmenteil (80) und einen zweiten Rahmenteil (81) umfasst, die um ein erstes, eine erste Kippachse bildendes Kippgelenk (82) gelenkig miteinander verbundenen sind,
- der erste Rahmenteil (80) um ein zweites, eine zweite Kippachse bildendes Kippgelenk (83) schwenkbar am Fahrwerksrahmen (4) gehaltert ist,
- der Ladecontainer (5) am zweiten Rahmenteil (81) befestigt ist,
**dadurch gekennzeichnet, dass**
- die erste Kippachse zum Anheben des heckseitigen Endes des Ladecontainers im Bereich des vorderen Endes (9) des Ladecontainers (5) und
- die zweite Kippachse zum Anheben des vorderen Endes (9) des Ladecontainers (5) und zum gleichzeitigen Absenken des heckseitigen Endes in einem Bereich zwischen dem vorderen und dem heckseitigen Ende des Ladecontainers (5) angeordnet ist und
- der Ladecontainer (5) als Abschiebecontainer mit einer Abschiebevorrichtung (10) ausgebildet ist.

2. Überladefahrzeug nach Anspruch 1, **dadurch gekennzeichnet, dass** der Kippmechanismus (8) eine mit dem ersten Rahmenteil (80) in Verbindung stehende erste Hubeinrichtung (84) und eine mit dem zweiten Rahmenteil (81) in Verbindung stehende zweite Hubeinrichtung (85) umfasst.

3. Überladefahrzeug nach Anspruch 2, **dadurch gekennzeichnet, dass** die erste und zweite Hubeinrichtung (84, 85) jeweils wenigstens einen hydraulischen Hubzylinder aufweisen.

4. Überladefahrzeug nach Anspruch 2 oder 3, **dadurch gekennzeichnet, dass** sich beide Hubeinrichtungen (84, 85) mit einem Ende am Fahrwerksrahmen (2) abstützen.

5. Überladefahrzeug nach einem oder mehreren der vorhergehenden Ansprüche, **dadurch gekennzeichnet, dass** der auf dem Fahrwerk (1) abstützende Fahrwerksrahmen (4) starr ausgebildet ist.

6. Überladefahrzeug nach Anspruch 1, **dadurch gekennzeichnet, dass** die Abschiebevorrichtung (10) als Abschiebewand oder Förderboden ausgebildet ist oder mit sonstigen Austragsmitteln ausgestattet ist.

7. Überladefahrzeug nach einem oder mehreren der vorhergehenden Ansprüche, **dadurch gekennzeichnet, dass** die Endladeöffhung (7) mit einer Klappe oder einer Fräse verschließbar ist.

8. Überladefahrzeug nach einem oder mehreren der vorhergehenden Ansprüche, **dadurch gekennzeichnet, dass** der Ladecontainer (5) von einer Fahrposition in eine Überladeposition mit angehobenem, heckseitigem Ende (6) und in eine Befüllposition mit gegenüber der Fahrposition abgesenktem, heckseitigem Ende (6) kippbar ist.

9. Überladefahrzeug nach einem oder mehreren der vorhergehenden Ansprüche, **dadurch gekennzeichnet, dass** das Überladefahrzeug selbstfahrend ausgebildet ist.

10. Überladefahrzeug nach einem oder mehreren der vorhergehenden Ansprüche, **dadurch gekennzeichnet, dass** das Überladefahrzeug als Anhänger ausgebildet ist.

## Claims

1. A transfer vehicle with a chassis (1), a chassis frame (4) that is supported on the chassis (1), a loading container (5) that is supported on the chassis frame (4) with a discharge opening (7) provided at a rear end (6), with the loading container (5) being supported on the chassis frame (4) with a tilting mechanism (8), wherein
- the tilting mechanism (8) comprises a first frame part (80) and a second frame part (81) that are interconnected so as to swivel in an articulated manner about a first tilt joint (82) that forms a first tilt axis,
- the first frame part (80) is supported on the chassis frame (4) so as to be swivelable about a second tilt joint (83) that forms a second tilt axis, and
- the loading container (5) is attached to the second frame part (81),
**characterized in that**
- the first tilt axis for lifting the rear end of the loading container is arranged in the region of the front end (9) of the loading container (5) and
- the second tilt axis for lifting the front end (9) of the loading container (5) and for simultaneously lowering the rear end is arranged in a region between the front and the rear end of the loading container (5) and
- the loading container (5) is embodied as a push-off container with a push-off mechanism (10).

2. The transfer vehicle as set forth in claim 1, **characterized in that** the tilting mechanism (8) comprises a first lifting device (84) that is connected to the first frame part (80) and a second lifting device (85) that is connected to the second frame part (81).

3. The transfer vehicle as set forth in claim 2, **characterized in that** the first and second lifting devices (84, 85) each comprise at least one hydraulic lifting cylinder.

4. The transfer vehicle as set forth in claim 2 or 3, **characterized in that** both lifting devices (84, 85) are supported with one end on the chassis frame (2).

5. The transfer vehicle as set forth in any one or more of the preceding claims, **characterized in that** chassis frame (4) that is supported on the chassis (1) is rigid.

6. The transfer vehicle as set forth in claim 1, **characterized in that** the push-off device (10) is embodied as a push-off wall or conveyor floor or is equipped with other discharging means.

7. The transfer vehicle as set forth in any one or more of the preceding claims, **characterized in that** the discharge opening (7) can be closed with a flap or an auger.

8. The transfer vehicle as set forth in any one or more of the preceding claims, **characterized in that** the loading container (5) can be tilted from a driving position into a transfer position with raised rear end (6) and into a filling position with a rear end (6) that is lowered in comparison to the driving position.

9. The transfer vehicle as set forth in any one or more of the preceding claims, **characterized in that** the transfer vehicle is self-propelled.

10. The transfer vehicle as set forth in any one or more of the preceding claims, **characterized in that** the transfer vehicle is a trailer.

## Revendications

1. Véhicule de transbordement, avec un train de roulement (1), un cadre de train de roulement (4), qui prend appui sur le train de roulement (1), une benne d'alimentation (5), qui, étant maintenue sur le cadre de train roulement (4), est dotée d'une ouverture de décharge (7), qui est prévue à une extrémité arrière, sachant que la benne d'alimentation (5) est maintenue sur le cadre de train roulement (4) au moyen d'un mécanisme de basculement (8),
sachant que
- le mécanisme de basculement (8) comprend une première partie de cadre (80) et une deuxième partie de cadre (81), qui sont reliées ensemble, de manière articulée, en pivotement autour d'une première articulation (82), qui forme un premier axe de basculement,
- la première partie de cadre (80) est maintenue sur le cadre de train roulement (4), en pivotement autour d'une deuxième articulation de basculement (83), qui forme un deuxième axe de basculement,
- la benne d'alimentation (5) est fixée sur la deuxième partie de cadre (81),
**caractérisé en ce que**
- le premier axe de basculement, pour le soulèvement de l'extrémité de la benne d'alimentation, côté arrière, est disposé dans la région de l'extrémité avant (9) de la benne d'alimentation (5), et
- le deuxième axe de basculement, pour le soulèvement de l'extrémité avant (9) de la benne d'alimentation (5) et l'abaissement simultané de l'extrémité, côté arrière, est disposé dans une région, qui est située entre l'extrémité avant et l'extrémité, côté arrière, de la benne d'alimentation (5), et
- la benne d'alimentation (5) est réalisée sous la forme de benne déverseuse, qui est dotée d'un dispositif de déversement (10).

2. Véhicule de transbordement selon la revendication 1,
**caractérisé en ce que** le mécanisme de basculement (8) est doté d'un premier dispositif de levage (84), qui est relié à une première partie de cadre (80) et d'un deuxième dispositif de levage (85), qui est relié à une deuxième partie de cadre (81).

3. Véhicule de transbordement selon la revendication 2,
**caractérisé en ce que** le premier et le deuxième dispositif de levage (84, 85) présentent chacun un vérin de levage hydraulique.

4. Véhicule de transbordement selon revendication 2 ou 3,
**caractérisé en ce que** les deux dispositifs de levage (84, 85) prennent appui, avec une extrémité, sur le cadre de train de roulement (2).

5. Véhicule de transbordement selon l'une ou plusieurs des revendications précédentes,
**caractérisé en ce que** le cadre de train roulement (4), qui prend appui sur le train de roulement (1), est de conception rigide.

6. Véhicule de transbordement selon la revendication 1,
**caractérisé en ce que** le dispositif de déversement est réalisé sous la forme de paroi coulissante ou de fond transporteur, ou est équipé d'autres moyens de déversement quelconques.

7. Véhicule de transbordement selon l'une ou plusieurs des revendications précédentes,
**caractérisé en ce que** l'ouverture arrière (7) peut être fermée au moyen d'un volet ou d'une fraise.

8. Véhicule de transbordement selon l'une ou plusieurs des revendications précédentes,
**caractérisé en ce que** la benne d'alimentation (5) peut, à partir d'une position de marche, être basculée dans une position de transbordement, dans laquelle une extrémité (6), côté arrière, est soulevée, et dans une position de remplissage, dans laquelle une extrémité (6), côté arrière, est abaissée par rapport à la position de marche.

9. Véhicule de transbordement selon l'une ou plusieurs des revendications précédentes,
**caractérisé en ce que** le véhicule de transbordement est réalisé en tant que véhicule automoteur.

10. Véhicule de transbordement selon l'une ou plusieurs des revendications précédentes,
**caractérisé en ce que** le véhicule de transbordement est réalisé sous la forme d'une remorque.
